(19) Europäisches Patentamt
European Patent Office
Office européen des brevets

(11) **EP 3 420 678 B1**

(12) **FASCICULE DE BREVET EUROPEEN**

(45) Date de publication et mention
de la délivrance du brevet:
**20.11.2019 Bulletin 2019/47**

(21) Numéro de dépôt: **17705153.9**

(22) Date de dépôt: **20.02.2017**

(51) Int Cl.:
*H04L 12/00* (2006.01)     *H04W 88/00* (2009.01)
*H04L 5/00* (2006.01)

(86) Numéro de dépôt international:
**PCT/EP2017/053778**

(87) Numéro de publication internationale:
**WO 2017/144406 (31.08.2017 Gazette 2017/35)**

(54) **PROCEDE D'ADAPTATION DYNAMIQUE D'UN DEBIT DE DONNEES**

VERFAHREN ZUR DYNAMISCHEN ANPASSUNG EINER DATENRATE

METHOD FOR THE DYNAMIC ADAPTATION OF A DATA RATE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.02.2016 FR 1651457**

(43) Date de publication de la demande:
**02.01.2019 Bulletin 2019/01**

(73) Titulaire: **Sagemcom Energy & Telecom SAS**
**92500 Rueil-Malmaison (FR)**

(72) Inventeurs:
• **SENNOUN, Yassir**
**92500 Rueil Malmaison (FR)**
• **LE GOURRIEREC, Marc**
**92500 Rueil Malmaison (FR)**

(74) Mandataire: **Cabinet Le Guen Maillet**
**3, impasse de la Vigie**
**CS 71840**
**35418 Saint-Malo Cedex (FR)**

(56) Documents cités:
**US-A1- 2015 103 785     US-B1- 6 563 822**

**Description**

La présente invention concerne une adaptation dynamique de débit de données en émission d'un dispositif terminal dans un réseau étendu à longue portée de type LPWAN (« Low-Power Wide Area Network » en anglais).

L'Internet des Objets (« Internet of Things » en anglais) émerge. L'Internet des Objets représente l'extension de l'Internet à des choses et à des lieux du monde physique. Alors que l'Internet ne se prolonge habituellement pas au-delà du monde électronique, l'Internet des Objets représente des échanges d'informations et de données provenant de dispositifs présents dans le monde réel vers l'Internet, comme par exemple pour effectuer une collecte de relevés de consommations électriques ou de consommations d'eau. L'Internet des Objets est considéré comme la troisième évolution de l'Internet, baptisée Web 3.0. L'Internet des Objets est en partie responsable de l'accroissement actuel du volume de données à transmettre et à stocker, et est ainsi à l'origine de ce qu'on appelle le « Big Data ». L'Internet des Objets revêt un caractère universel pour désigner des objets connectés aux usages variés, par exemple dans le domaine industriel, agro-alimentaire, de la e-santé ou de la domotique.

Pour permettre à des objets communicants de communiquer dans le cadre de l'Internet des Objets, des passerelles de collecte situées sur des points géographiquement hauts sont déployées par un opérateur. Hors opérations de maintenance, ces passerelles sont typiquement fixes et permanentes. On peut par exemple citer sur ce modèle les réseaux SigFox (marque déposée) ou ThingPark (marque déposée). Ces passerelles de collecte communiquent avec les objets communicants grâce à des systèmes de communication radio moyenne ou longue portée de type LPWAN, comme par exemple la technologie LoRaWAN (marque déposée, « Long Range Wide-Area Network » en anglais), aussi connue sous le diminutif « LoRa » (marque déposée, « Long Range » en anglais) du nom de l'alliance faisant la promotion de technologies de réseaux étendus à longue portée LoRaWAN (marque déposée). Ces passerelles servent ainsi de relais entre les objets communicants et un serveur (réseau cœur) configuré pour traiter des informations remontées par les objets communicants et pour envoyer des commandes auxdits objets communicants.

De telles commandes envoyées par le serveur auxdits objets communicants concernent par exemple des ajustements de débit d'émission via un facteur d'étalement SF (« Spread Factor » en anglais) et/ou des ajustements de niveau de puissance de transmission Tx-Power, ce qui permet donc d'appliquer des politiques de débit (de données) adaptatif ADR (« Adaptive Data Rate » en anglais). Une particularité des réseaux de communication radio moyenne ou longue portée de type LPWAN est que le choix du débit et/ou du niveau émission de chaque objet communicant est fait par le serveur et non pas localement entre ledit objet communicant et une passerelle de collecte avec laquelle ledit objet communicant est en relation. Ce choix se fait sur la base d'indications de niveau de signal reçu RSSI (« Received Signal Strength Indication » en anglais) pour des trames de données reçues en provenance dudit objet communicant. Toutefois, cela nécessite que le serveur dispose de ressources mémoire conséquentes pour stocker les indications de niveau de signal reçu RSSI pour une masse importante de trames reçues, et ce pour chaque objet communicant qui est sous le contrôle dudit serveur.

De plus, une difficulté des politiques de débit (de données) adaptatif ADR est d'éviter des changements intempestifs de configuration des objets communicants.

Il est souhaitable de pallier ces inconvénients de l'état de la technique, que l'on retrouve plus généralement dans les réseaux de communication sans-fil.

A noter le document US 2015/103785 A1 qui divulgue un procédé de gestion de transmission d'une vidéo dans lequel une allocation de ressources supplémentaires est demandée lorsque le rapport entre la qualité de la vidéo transmise et une qualité cible est inférieur à un seuil prédéterminé. A noter aussi le document US 6,563,822 B1 qui divulgue un procédé de gestion de transmissions de données dans lequel un mécanisme de gestion de retransmission implique que des retransmissions requises au sein de sous-réseaux sont effectuées en mode point-à-multipoint au sein desdits sous-réseaux et que des retransmissions requises au-delà des frontières des sous-réseaux sont effectuées en mode point-à-point. Le mécanisme de gestion de retransmission est complété par un mécanisme de contrôle de flux dans le lequel des ajustements de débit de transmission par des serveurs extérieurs auxdits sous-réseaux peuvent aussi être requis en fonction de taux de remplissage de mémoires tampon de terminaux destinataires respectifs dans lesdits sous-réseaux.

L'invention concerne un procédé d'adaptation dynamique d'un débit de données en émission d'un dispositif terminal dans un réseau de communication sans-fil, le procédé étant exécuté par un serveur dudit réseau, des profils d'émission prédéfinis qui correspondent à des débits de données respectifs étant associés respectivement à des sensibilités en réception, lesdites sensibilités en réception représentant des niveaux minimum de signal en réception pour décoder des signaux transmis respectivement selon lesdits profils d'émission prédéfinis. Le procédé est tel que le serveur effectue une optimisation dudit débit de données en émission par paliers successifs, et chaque palier définit : une quantité $N$ de trames à analyser, un premier seuil $TH1$ de taux de délivrance de trames, un second seuil $TH2$ de taux de délivrance de trames inférieur audit premier seuil $TH1$, une première marge $M1$, et une seconde marge $M2$ inférieure ou égale à ladite première marge $M1$, de telle sorte que ladite quantité $N$ de chaque palier est inférieure ou égale à ladite quantité $N$ du palier suivant, ladite première marge M1 de chaque palier est inférieure ou égale à ladite première marge M1 du palier suivant, et ladite seconde marge M2 de chaque palier est inférieure ou égale à ladite seconde marge M2 du palier suivant. De plus, l'optimisation est opérée selon un palier en cours, le serveur effectue les étapes suivantes : retenir une indication de niveau de signal reçu pour chaque trame reçue d'une série de N trames émises par le dispositif terminal ; déterminer un taux de délivrance de trames pour ladite série de N trames ; lorsque le taux de délivrance de trames déterminé est supérieur ou égal audit premier seuil TH1 du palier en cours, passer au palier suivant, et sélectionner le profil d'émission à faire appliquer audit dispositif terminal en conservant au moins la seconde marge M2 du palier en cours entre l'indication de niveau de signal reçu retenue et la sensibilité en réception correspondant audit profil d'émission ; lorsque le taux de délivrance de trames déterminé est inférieur audit premier seuil TH1 du palier en cours et est supérieur audit second seuil TH2 du palier en cours, sélectionner le profil d'émission à faire appliquer audit dispositif terminal en conservant la première marge M1 du palier en cours entre l'indication de niveau de signal reçu retenue et la sensibilité en réception correspondant audit profil d'émission ; et lorsque le taux de délivrance de trames déterminé est inférieur ou égal audit second seuil TH2 du palier en cours, stopper ou réinitialiser l'optimisation. Ainsi, l'approche par palier permet une optimisation graduelle du profil d'émission dudit dispositif terminal, en appliquant des marges de plus en plus restreintes, et évite les configurations intempestives dudit dispositif terminal.

Selon un mode de réalisation particulier, chaque palier définit en outre une quantité K de plus mauvaises indications de niveau de signal reçu à écarter par série de N trames, et, pour retenir une indication de niveau de signal reçu pour chaque trame reçue d'une série de N trames émises par le dispositif terminal, le serveur stocke les K+1 plus mauvaises indications de niveau de signal reçu pour ladite série de N trames, et le serveur retient la meilleure indication de niveau de signal reçu parmi les indications de niveau de signal reçu stockées. Ainsi, il est uniquement nécessaire de stocker les K+1 plus mauvaises indications de niveau de signal reçu pour ladite série de N trames, ce qui est avantageux en termes de consommation de ressources mémoire.

Selon un mode de réalisation particulier, l'optimisation débute par un palier d'initialisation ne définissant pas de second seuil TH2 de taux de délivrance de trames. Ainsi, le palier d'initialisation permet d'amorcer l'optimisation.

Selon un mode de réalisation particulier, l'optimisation se termine par un palier final et, lorsque l'optimisation est opérée selon le palier final : lorsque le taux de délivrance de trames déterminé est supérieur ou égal audit premier seuil TH1 dudit palier final, sélectionner le profil d'émission à faire appliquer audit dispositif terminal en conservant au moins la seconde marge M2 du palier final entre l'indication de niveau de signal reçu retenue et la sensibilité en réception correspondant audit profil d'émission, et demander audit dispositif terminal de diminuer un niveau de puissance d'émission.

Selon un mode de réalisation particulier, le débit de données en émission est représenté par un facteur d'étalement d'une modulation de type CSS (« Chirp Spread Sprectrum » en anglais).

Selon un mode de réalisation particulier, le réseau de communication sans-fil est un réseau étendu à longue portée de type LPWAN, le réseau de communication sans-fil relie le dispositif terminal à au moins une passerelle de collecte servant de relais avec le serveur, et le serveur reçoit chaque trame relayée par chaque passerelle de collecte en association avec une indication de niveau de signal reçu déterminée par ladite passerelle de collecte sur réception de ladite trame.

Selon un mode de réalisation particulier, le réseau de communication sans-fil implémente le protocole LoRaWAN.

L'invention concerne également un serveur configuré pour effectuer une adaptation dynamique d'un débit de données en émission d'un dispositif terminal dans un réseau de communication sans-fil, des profils d'émission prédéfinis qui correspondent à des débits de données respectifs étant associés respectivement à des sensibilités en réception, lesdites sensibilités en réception représentant des niveaux minimum de signal en réception pour décoder des signaux transmis respectivement selon lesdits profils d'émission prédéfinis. Le serveur est configuré pour effectuer une optimisation dudit débit de données en émission par paliers successifs, et chaque palier définit : une quantité N de trames à analyser, un premier seuil TH1 de taux de délivrance de trames, un second seuil TH2 de taux de délivrance de trames inférieur audit premier seuil TH1, une première marge M1, et une seconde marge M2 inférieure ou égale à ladite première marge M1, de telle sorte que ladite quantité N de chaque palier est inférieure ou égale à ladite quantité N du palier suivant, ladite première marge M1 de chaque palier est inférieure ou égale à ladite première marge M1 du palier suivant, et ladite seconde marge M2 de chaque palier est inférieure ou égale à ladite seconde marge M2 du palier suivant. De plus, le serveur est configuré, lorsque l'optimisation est opérée selon un palier en cours, pour: retenir une indication de niveau de signal reçu pour chaque trame reçue d'une série de N trames émises par le dispositif terminal ; déterminer un taux de délivrance de trames pour ladite série de N trames ; lorsque le taux de délivrance de trames déterminé est supérieur ou égal audit premier seuil TH1 du palier en cours, passer au palier suivant, et sélectionner le profil d'émission à faire appliquer audit dispositif terminal en conservant au moins la seconde marge M2 du palier en cours entre l'indication de niveau de signal reçu retenue et la sensibilité en réception correspondant audit profil d'émission ; lorsque le taux de délivrance de trames déterminé est inférieur audit premier seuil TH1 du palier en cours et est supérieur audit second seuil TH2 du palier en cours, sélectionner le profil d'émission à faire appliquer audit dispositif terminal en conservant la première marge M1 du palier en cours entre l'indication de niveau de signal reçu retenue et la sensibilité en réception correspondant audit profil d'émission ; et lorsque le taux de délivrance de trames déterminé est inférieur ou égal audit second seuil TH2 du palier en cours, stopper ou réinitialiser l'optimisation.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. L'invention concerne également un médium de stockage d'informations stockant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un système de communication dans lequel la présente invention peut être implémentée ;
- la Fig. 2 illustre schématiquement un exemple d'architecture matérielle d'un dispositif de communication du système de communication de la Fig. 1 ;
- la Fig. 3 illustre schématiquement un exemple d'architecture protocolaire implémentée dans le système de communication de la Fig. 1 ;
- la Fig. 4 illustre schématiquement une table de correspondance entre facteurs d'étalement et niveaux respectifs de sensibilité en réception ;
- la Fig. 5 illustre schématiquement une table de définition de paramètres de paliers à utiliser dans le cadre d'une adaptation dynamique de débit de données en émission; et
- la Fig. 6 illustre schématiquement un algorithme d'adaptation dynamique de débit de données en émission, dans un mode de réalisation particulier de l'invention.

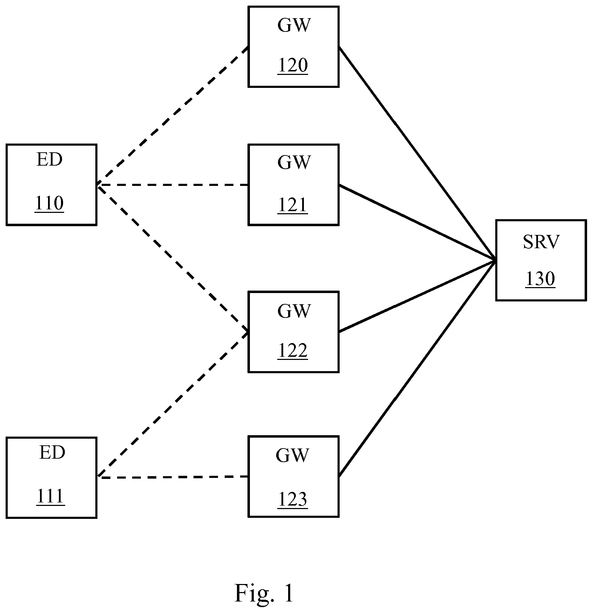

La Fig. 1 illustre schématiquement un système de communication dans lequel la présente invention peut être implémentée.

Le système de communication comporte une pluralité de passerelles de collecte 120, 121, 122, 123. Les passerelles de collecte 120, 121, 122, 123 disposent de liens de communication respectifs avec un serveur 130 auquel lesdites passerelles de collecte sont rattachées. Selon un mode de réalisation particulier, chaque passerelle de collecte 120, 121, 122, 123 intègre une fonction d'accès à l'Internet et le lien de communication entre ladite passerelle résidentielle avec le serveur 130 repose sur le protocole IP (« Internet Protocol » en anglais, tel que défini dans le document normatif RFC 791).

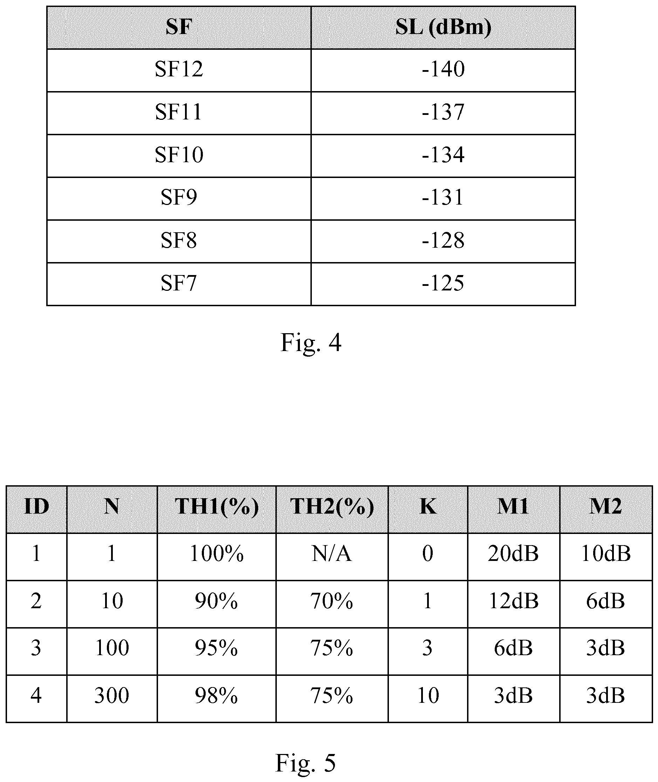

Dans le système de communication, des messages doivent être remontés sous forme de trames depuis chaque dispositif terminal 110, 111 jusqu'au serveur 130. Ledit serveur 130 a un rôle de contrôle et de collecte d'informations disponibles auprès des dispositifs terminaux 110, 111, et les passerelles de collecte 120, 121, 122, 123 ont un rôle de relais entre les dispositifs terminaux 110, 111 et le serveur 130. Des messages, notamment de commande, peuvent aussi être transmis sous forme de trames depuis le serveur 130 jusqu'aux dispositifs terminaux 110, 111 via les passerelles de collecte 120, 121, 122, 123. De telles commandes envoyées par le serveur 130 auxdits dispositifs terminaux 110, 111 concernent plus particulièrement des ajustements de débit d'émission, ce qui permet donc d'appliquer des politiques de débit (de données) adaptatif ADR, tel que décrit ci-après en relation avec les Figs. 4 à 6. Les ajustements de débit d'émission peuvent être effectués via des ajustements de facteur d'étalement SF. De telles commandes envoyées par le serveur 130 auxdits dispositifs terminaux 110, 111 peuvent aussi concerner des ajustements de niveau de puissance d'émission TxPower.

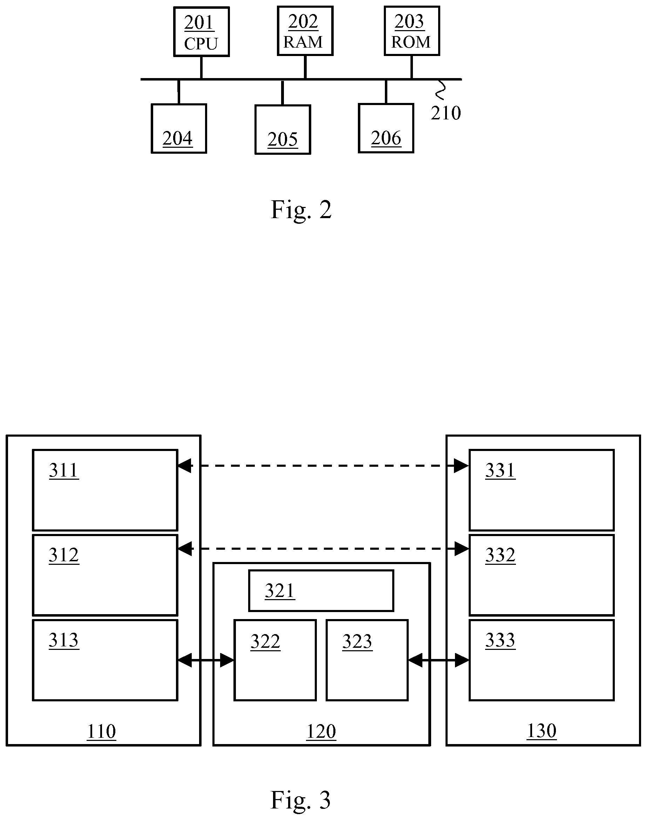

Pour permettre de remplir ce rôle de relais, chaque passerelle de collecte 120, 121, 122, 123 dispose d'au moins une interface radio permettant à ladite passerelle de collecte de communiquer avec au moins un dispositif terminal 110, 111 en s'appuyant sur un réseau de communication sans-fil, et préférentiellement selon une technologie de communication de type LPWAN. Ladite interface radio est par exemple de type LoRa (marque déposée) permettant ainsi d'implémenter, au sein du système de communication, un protocole de transmission de données de type LoRaWAN (marque déposée). Ladite interface radio est telle qu'un dispositif terminal peut être à portée de communication par voie radio d'une pluralité de passerelles de collecte, selon la position géographique dudit dispositif terminal par rapport aux passerelles de collecte 120, 121, 122, 123 et des conditions de transmission par voie radio dans l'environnement dudit dispositif terminal et des passerelles de collecte 120, 121, 122, 123. C'est le cas par exemple du dispositif terminal 110 sur la Fig. 1, qui est à portée de communication par voie radio des passerelles de collecte 120, 121 et 122. Le dispositif terminal 111 sur la Fig. 1 est, quant à lui, à portée de communication par voie radio des passerelles de collecte 122 et 123. Un exemple d'architecture protocolaire implémentée dans le système de communication pour permettre aux dispositifs terminaux 110, 111 et au serveur 130 de communiquer via les passerelles de collecte 120, 121, 122, 123 est décrit ci-après en relation avec la Fig. 3. Si la portée des communications le permet, et si le serveur 130 est équipé d'une interface radio permettant de communiquer directement avec les dispositifs terminaux 110, 111, alors le système de communication peut se passer des passerelles de collecte 120, 121, 122, 123.

La **Fig. 2** illustre schématiquement un exemple d'architecture matérielle d'un dispositif de communication du système de communication de la Fig. 1. Chaque dispositif terminal 110, 111 et/ou chaque passerelle de collecte 120, 121, 122, 123 et/ou le serveur 130 peuvent être construits sur la base d'une telle architecture matérielle.

Le dispositif de communication comporte, reliés par un bus de communication 210: un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage ou un lecteur de support de stockage, tel qu'un lecteur de cartes SD (« Secure Digital » en anglais) 204 ou un disque dur HDD (« Hard Disk Drive » en anglais) ; une interface de communication 205, et éventuellement une autre interface de communication 206.

Lorsque le dispositif de communication de la Fig. 2 représente un dispositif terminal 110, 111 du système de communication, l'interface de communication 205 est configurée pour permettre audit dispositif terminal de communiquer avec des passerelles de collecte du système de communication. A noter que l'interface de communication 205 peut être configurée pour permettre audit dispositif terminal de communiquer directement avec le serveur 130.

Lorsque le dispositif de communication de la Fig. 2 représente une passerelle de collecte 120, 121, 122, 123 du système de communication, l'interface de communication 205 est configurée pour permettre à ladite passerelle de collecte de communiquer avec des dispositifs terminaux du système de communication, et l'autre interface de communication 206 est configurée pour permettre à ladite passerelle de collecte de communiquer avec le serveur 130.

Lorsque le dispositif de communication de la Fig. 2 représente le serveur 130, l'interface de communication 205 est configurée pour permettre audit serveur 130 de communiquer avec les passerelles de collecte 120, 121, 122, 123. A noter que l'interface de communication 205 peut être configurée pour permettre audit serveur 130 de communiquer directement avec les dispositifs terminaux 110, 111 du système de communication.

Le processeur 201 est capable d'exécuter des instructions chargées dans la RAM 202 à partir de la ROM 203, d'une mémoire externe, d'un support de stockage, ou d'un réseau de communication. Lorsque le dispositif de communication est mis sous tension, le processeur 201 est capable de lire de la RAM 202 des instructions et de les exécuter. Ces instructions forment un programme d'ordinateur causant la mise en œuvre, par le processeur 201, de tout ou partie des algorithmes et étapes décrits ici en relation avec le dispositif de communication en question.

Ainsi, tout ou partie des algorithmes et étapes décrits ici peut être implémenté sous forme logicielle par exécution d'un ensemble d'instructions par une machine programmable, tel qu'un DSP (« Digital Signal Processor » en anglais) ou un microcontrôleur. Tout ou partie des algorithmes et étapes décrits ici peut aussi être implémenté sous forme matérielle par une machine ou un composant dédié, tel qu'un FPGA (« Field-Programmable Gate Array » en anglais) ou un ASIC (« Application-Specific Integrated Circuit » en anglais).

La Fig. 3 illustre schématiquement un exemple d'architecture protocolaire implémentée dans le système de communication de la Fig. 1. La Fig. 3 illustre l'architecture protocolaire de manière répartie entre le dispositif terminal 110, la passerelle de collecte 120 et le serveur 130.

Le dispositif terminal 110 comporte une couche haute 311 et une couche basse 313, ainsi qu'une couche intermédiaire 312 faisant le lien entre la couche haute 311 et la couche basse 313. La couche haute 311 est une application client. La couche intermédiaire 312 implémente le protocole d'échange, par exemple de type LoRaWAN (marque déposée), entre le dispositif terminal 110 et le serveur 130. La couche basse 313 est la couche physique (PHY) de l'interface radio du dispositif terminal 110, par exemple de type LoRa (marque déposée), qui permet audit dispositif terminal 110 de communiquer avec les passerelles de collecte du système de communication, comme par exemple la passerelle de collecte 120.

Le serveur 130 comporte une couche haute 331 et une couche basse 333, ainsi qu'une couche intermédiaire 332 faisant le lien entre la couche haute 331 et la couche basse 333. La couche haute 331 est une application serveur. La couche intermédiaire 332 implémente le protocole d'échange, par exemple de type LoRaWAN (marque déposée), entre le serveur 130 et les dispositifs terminaux 110, 111. La couche basse 333 est la couche physique (PHY) de l'interface du serveur 130 qui permet de communiquer avec les passerelles de collecte 120, 121, 122, 123.

La passerelle de collecte 120 comporte une première couche basse 322 et une seconde couche basse 323, ainsi qu'un module d'adaptation 321. La première couche basse 322 est la couche physique (PHY) de l'interface radio de la passerelle de collecte 120 qui permet de communiquer avec des dispositifs terminaux du système de communication, comme par exemple le dispositif terminal 110. La seconde couche basse 323 est la couche physique (PHY) de l'interface de la passerelle de collecte 120 qui permet de communiquer avec le serveur 130. Le module d'adaptation 321 est configuré pour convertir les messages reçus via la première couche basse 322 en messages adaptés à la seconde couche basse 323, et vice versa. Lors de cette conversion, la passerelle de collecte 120 peut enrichir ledit message par des informations complémentaires, comme par exemple une indication de niveau de signal reçu RSSI déterminé par ladite passerelle de collecte 120 sur réception dudit message.

L'architecture protocolaire représentée sur la Fig. 3 est telle que la couche intermédiaire 312 du dispositif terminal 110 communique avec la couche intermédiaire 332 du serveur 130, en s'appuyant sur les couches basses respectives du dispositif terminal 110 et du serveur 130 via la passerelle de collecte 120. L'architecture protocolaire représentée sur la Fig. 3 est aussi telle que la couche haute 311 du dispositif terminal 110 communique avec la couche haute 331 du serveur 130, en s'appuyant sur les couches intermédiaires respectives 312, 332 du dispositif terminal 110 et du serveur 130.

Les couches et modules protocolaires représentés peuvent être complétés, notamment par des piles protocolaires permettant au serveur 130 d'échanger avec la passerelle de collecte 120, notamment pour permettre au serveur 130 de configurer la passerelle de collecte 120.

La **Fig. 4** illustre schématiquement une table de correspondance entre profils d'émission prédéfinis (correspondant à des débits de données prédéfinis respectifs) et niveaux respectifs de sensibilité en réception SL (« Sensitivity Level » en anglais). Dans la table de la Fig. 4, les profils d'émission sont représentés par des facteurs d'étalement SF respectifs utilisés en modulation CSS (« Chirp Spread Sprectrum » en anglais). Les niveaux de sensibilités en réception SL sont équivalents à des niveaux minimum de signal en réception pour permettre de décoder des signaux transmis respectivement selon lesdits profils d'émission prédéfinis.

La table de correspondance de la Fig. 4 définit ainsi des niveaux de sensibilité en réception SL pour un ensemble de six facteurs d'étalement SF : SF12, SF11, SF10, SF9, SF8 et SF7. Ces six facteurs d'étalement SF correspondent plus particulièrement aux paramètres d'étalement de spectre définis dans le protocole LoRaWAN (marque déposée). Les facteurs d'étalement SF sont présentés ici selon un ordre croissant des débits de données auxquels lesdits facteurs d'étalement SF correspondent.

Ainsi, si par exemple une trame transmise par un dispositif terminal est reçue par une passerelle de collecte avec une indication de niveau de signal reçu RSSI égale à -129dBm alors que ledit dispositif terminal utilise un facteur d'étalement SF correspondant à SF12, on peut extrapoler que cette trame peut être reçue par ladite passerelle de collecte pour un facteur d'étalement SF en émission correspondant à SF11, ou à SF10, ou à SF9. En acceptant une marge de 3dBm par rapport au niveau de sensibilité limite, une optimisation consisterait à faire utiliser par ledit dispositif terminal un facteur d'étalement SF en émission correspondant à SF10.

Afin d'affiner l'optimisation des paramètres d'émission du dispositif terminal et d'éviter les changements intempestifs de configuration dudit dispositif terminal, il est proposé que l'optimisation se fasse par paliers successifs, de telle sorte que chaque franchissement de palier est décidé en fonction du taux de délivrance de trames en provenance dudit dispositif terminal, et que ledit franchissement de palier s'accompagne d'une augmentation de durée d'intégration pour déterminer ledit taux de délivrance de trames, ainsi que d'une augmentation du taux de délivrance de trames à atteindre pour permettre un nouveau franchissement de palier, et d'une diminution de la marge à respecter par rapport à un niveau de sensibilité limite correspondant au profil d'émission effectivement choisi. Un exemple illustratif de divers paramètres définissant les différents paliers pour chaque dispositif terminal contrôlé par le serveur 130 est décrit ci-après en relation avec la Fig. 5.

Ainsi, la **Fig. 5** illustre schématiquement une table de définition de paramètres de paliers à utiliser dans le cadre d'une adaptation dynamique de débit de données en émission.

Dans la table de la Fig. 5, les différents paliers sont représentés dans l'ordre chronologique dans lequel lesdits paliers peuvent être utilisés dans le cadre de l'optimisation des paramètres d'émission du dispositif terminal concerné.

La table de la Fig. 5 comporte sept colonnes.

La première colonne fournit, pour chaque palier, un identifiant de palier ID.

La seconde colonne fournit, pour chaque palier, une information représentative d'une quantité N de trames à considérer pour déterminer un taux de perte de données (ou un taux de délivrance de trames) servant ensuite au serveur 130 d'indicateur pour décider de baser l'optimisation sur le palier courant, ou de baser l'optimisation sur le palier suivant, ou éventuellement de stopper ou de réinitialiser l'optimisation. La quantité N définit ainsi pour chaque palier une série de trames à analyser pour pratiquer l'optimisation. A noter que ladite quantité N de chaque palier est inférieure ou égale à ladite quantité N du palier suivant, et ce afin d'augmenter (ou de stabiliser) la durée d'intégration au franchissement de palier.

La troisième colonne fournit un premier seuil TH1 de taux de délivrance de trames au-delà duquel le serveur 130 décide de baser l'optimisation sur le palier suivant. De manière équivalente, le premier seuil TH1 peut être un seuil de taux de perte de données en-dessous duquel le serveur 130 décide de baser l'optimisation sur le palier suivant.

La quatrième colonne fournit un second seuil TH2 de taux de délivrance de trames en-dessous duquel le serveur 130 décide de stopper ou de réinitialiser l'optimisation, le second seuil TH2 étant alors, pour chaque palier, strictement inférieur au premier seuil TH1. De manière équivalente, le second seuil TH2 peut être un seuil de taux de perte de données au-delà duquel le serveur 130 décide de stopper ou de réinitialiser l'optimisation, le second seuil TH2 étant alors, pour chaque palier, strictement supérieur au premier seuil TH1.

La cinquième colonne fournit optionnellement une information représentative d'une quantité K de plus mauvaises indications de niveau de signal reçu RSSI, pour une série de N trames en cours d'analyse, qui doivent être écartées pour déterminer une indication de niveau minimum de signal reçu RSSI pour ladite série de N trames en cours d'analyse.

La sixième colonne fournit une information représentative d'une première marge M1 à conserver entre le niveau minimum de signal reçu RSSI déterminée et le niveau de sensibilité en réception SL correspondant (selon la table de la Fig. 4) au facteur d'étalement SF sélectionné par l'optimisation au passage vers le palier suivant.

La septième colonne fournit une information représentative d'une seconde marge M2 à conserver entre le niveau minimum de signal reçu RSSI déterminée et le niveau de sensibilité en réception SL correspondant (selon la table de la Fig. 4) au facteur d'étalement SF sélectionné par l'optimisation lorsque l'optimisation conserve le palier en cours.

La table de la Fig. 5 comporte une pluralité de paliers, et, de manière illustrative, quatre paliers. Les paliers sont listés dans l'ordre dans lequel lesdits paliers peuvent être franchis par l'optimisation.

En premier lieu, la table de la Fig. 5 comporte un palier d'initialisation (dont l'identifiant ID a la valeur « 1 »), pour lequel il n'y a pas de définition de second seuil TH2 de taux de délivrance de trames en-dessous duquel le serveur 130 décide de stopper ou de réinitialiser l'optimisation. En variante, le second seuil TH2 de taux de délivrance de trames peut être aussi défini, pour ledit palier d'initialisation, en fonction notamment de la valeur du paramètre N pour ledit palier d'initialisation. Dans l'exemple de la Fig. 5, pour le palier d'initialisation : le paramètre N a pour valeur « 1 », le premier seuil TH1 est de 100%, le paramètre K a pour valeur « 0 », la première marge M1 a pour valeur 20 dB, et la seconde marge M2 a pour valeur 10 dB.

Ensuite, la table de la Fig. 5 comporte deux paliers intermédiaires (dont les identifiants ID ont respectivement les valeurs « 2 » et « 3 »). Dans l'exemple de la Fig. 5, pour le palier intermédiaire ayant pour identifiant ID la valeur « 2 » : le paramètre N a pour valeur « 10 », le premier seuil TH1 a pour valeur 90%, le second seuil TH2 a pour valeur « 70% », le paramètre K a pour valeur « 1 », la première marge M1 a pour valeur 12 dB et la seconde marge M2 a pour valeur 6 dB. Dans l'exemple de la Fig. 5, pour le palier intermédiaire ayant pour identifiant ID la valeur « 3 » : le paramètre N a pour valeur « 100 », le premier seuil TH1 a pour valeur 95%, le second seuil TH2 a pour valeur 75%, le paramètre K a pour valeur « 3 », la première marge M1 a pour valeur 6 dB, et la seconde marge M2 a pour valeur 3 dB.

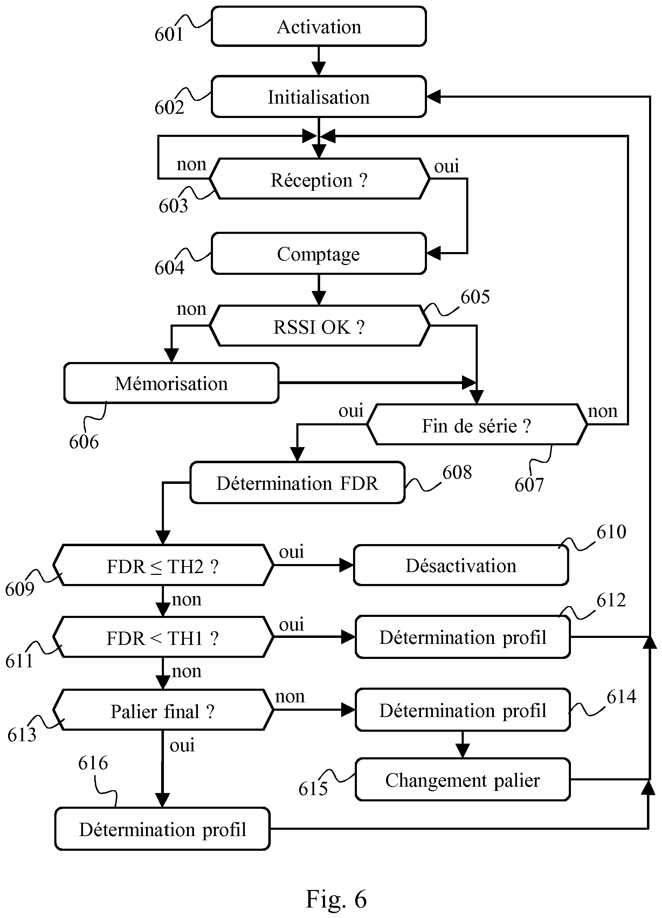

Enfin, la table de la Fig. 5 comporte un palier final (dont l'identifiant ID a la valeur « 4 »), pour lequel la première marge M1 n'est pas utilisée lors du passage au palier suivant (puisqu'il n'existe pas de palier au-delà du palier final) mais pour décider de demander au dispositif terminal concerné de réduire le niveau de puissance d'émission utilisé par ledit dispositif terminal. En variante, le palier final ne comporte pas de définition de première marge M1, seulement une définition de seconde marge M2. Le serveur 130 applique alors, pour ce qui est du palier final, systématiquement la seconde marge M2 lorsqu'il s'agit de déterminer le profil d'émission à faire appliquer par ledit dispositif terminal (voir détails ci-après en relation avec la Fig. 6). Une approche équivalente, comme illustrée sur la Fig. 5, consiste à fixer la première marge M1 et la seconde marge M2 à une même valeur. Dans l'exemple de la Fig. 5, pour le palier final : le paramètre N a pour valeur « 300 », le premier seuil TH1 a pour valeur 98%, le second seuil TH2 a pour valeur « 75% », le paramètre K a pour valeur « 10 », la première marge M1 a pour valeur 3 dB, et la seconde marge M2 a pour valeur 3 dB.

Ainsi, pour chaque dispositif terminal que le serveur 130 est amené à contrôler pour appliquer une politique de débit (de données) adaptatif ADR, le serveur 130 stocke une information représentative du fait que ledit dispositif terminal autorise, ou pas, une adaptation dynamique de ses paramètres d'émission. Et lorsque ledit dispositif terminal autorise une telle adaptation dynamique de ses paramètres d'émission, le serveur 130 stocke l'identifiant du palier auquel est actuellement parvenue l'optimisation des paramètres d'émission dudit dispositif terminal, et le facteur d'étalement SF actuellement utilisé par ledit dispositif terminal, et éventuellement le niveau de puissance d'émission TxPower actuellement utilisé par ledit dispositif terminal. Le serveur 130 alloue de plus une mémoire tampon pour stocker les K+1 (dépendant donc du palier auquel est actuellement parvenue l'optimisation des paramètres d'émission dudit dispositif terminal) plus mauvaises indications de niveau de signal reçu RSSI pour une série de trames en cours d'analyse, afin de permettre au serveur 130 de ne finalement retenir qu'une seule indication de niveau de signal reçu RSSI pertinente pour toute une série de trames en cours d'analyse.

Il convient de noter que: ladite quantité N de chaque palier est inférieure ou égale à ladite quantité N du palier suivant ; ladite première marge M1 de chaque palier est inférieure ou égale à ladite première marge M1 du palier suivant ; et ladite seconde marge M2 de chaque palier est inférieure ou égale à ladite seconde marge M2 du palier suivant. De plus, à l'exception du palier d'initialisation qui sert à amorcer l'optimisation, le premier seuil TH1 de taux de délivrance de trames de chaque palier est inférieur ou égal au premier seuil TH1 de taux de délivrance de trames du palier suivant, et le second seuil TH2 de taux de délivrance de trames de chaque palier est inférieur ou égal au premier seuil TH2 de taux de délivrance de trames du palier suivant. Les critères pour autoriser un franchissement de palier sont donc de plus en plus sévères au fil de la progression de l'optimisation parmi les paliers.

Les valeurs des paramètres de la table de la Fig. 5 sont typiquement définies par expérimentation et/ou simulations, et sont fixées de manière à limiter les reconfigurations intempestives des dispositifs terminaux concernés.

Il convient aussi de noter qu'il est possible que le serveur 130 dispose de plusieurs tables de définition de paramètres de paliers, et que le serveur 130 utilise telle ou telle table pour optimiser les paramètres d'émission d'un ou plusieurs dispositifs terminaux et telle ou telle autre table pour optimiser les paramètres d'émission d'un ou plusieurs autres dispositifs terminaux, par exemple selon le type (capacités, fonction,...) desdits dispositifs terminaux.

La **Fig. 6** illustre schématiquement un algorithme, implémenté par le serveur 130, d'adaptation dynamique de débit de données en émission d'un dispositif terminal, dans un mode de réalisation particulier de l'invention. Considérons à titre illustratif que le serveur 130 souhaite optimiser les paramètres en émission du dispositif terminal 110 dans le cadre du système de communication de la Fig. 1.

Il est considéré au début de l'algorithme de la Fig. 6 que le serveur 130 et le dispositif terminal 110 sont aptes à effectuer une optimisation des paramètres en émission du dispositif terminal 110. Soit le système de communication est tel que le serveur 130 et tous les dispositifs terminaux qui lui sont rattachés sont aptes à effectuer une optimisation des paramètres en émission desdits dispositifs terminaux ; soit il est considéré que le système de communication est hétérogène, c'est-à-dire qu'il peut comporter des dispositifs qui ne sont pas aptes à effectuer une telle optimisation. Dans ce dernier cas, chaque entête de trame FH (« Frame Header » en anglais) comporte un champ FH.ADR (par exemple sous la forme d'un unique bit) indiquant si le dispositif (serveur ou dispositif terminal) est apte (bit à « 1 »), ou pas (bit à « 0 »), à effectuer une telle optimisation. Un échange de trames permet donc au serveur 130 et à chaque dispositif terminal concerné de savoir si l'adaptation dynamique de débit de données en émission est possible.

Dans une étape 601, le serveur 130 active l'optimisation des paramètres en émission du dispositif terminal 110. Le palier d'initialisation est ainsi sélectionné vis-à-vis du dispositif terminal 110.

Dans une étape 602 suivante, le serveur 130 initialise l'optimisation des paramètres en émission du dispositif terminal 110. Le serveur 130 met notamment à disposition une mémoire tampon pour stocker les K+1 plus mauvaises indications de niveau de signal reçu RSSI pour la série de trames à venir (K étant alors choisi, dans la table de définition de paramètres de paliers de la Fig. 5, pour correspondre au palier d'initialisation). Si le dispositif terminal 110 utilise actuellement (e.g. par défaut) une valeur de débit en émission, à savoir une valeur de facteur d'étalement SF, qui n'est pas connue *a priori* du serveur 130, le serveur 130 envoie au dispositif terminal 110 une commande demandant à ce que le dispositif terminal 110 applique un profil d'émission choisi (*e.g.* par défaut) par le serveur 130. Dans le protocole LoRaWan, cette commande prend la forme d'un message MAC (« Médium Access Control » en anglais) de type LinkADRReq. Par exemple, le dispositif terminal 110 applique des paramètres en émission impliquant le débit de données le plus faible dans la table de correspondance entre profils d'émission prédéfinis et niveaux respectifs de sensibilité en réception SL (*e.g.* SF12 dans le cadre de la Fig. 4). En outre, le serveur 130 initialise à zéro un compteur NbRx_Frames destiné à compter le nombre de trames distinctes reçues en provenance du dispositif terminal 110.

Dans une étape 603 suivante, le serveur 130 vérifie si ledit serveur 130 a reçu une nouvelle trame en provenance du dispositif terminal 110. Comme déjà expliqué, dans le cadre de communications de type LPWAN, au moins une passerelle de collecte sert de relais entre le dispositif terminal 110 et le serveur 130. Il est donc possible que le serveur 130 reçoive plusieurs exemplaires d'une même trame émise par le dispositif terminal 110. Chaque trame comporte un numéro de séquence choisi par l'émetteur de ladite trame pour permettre de distinguer ladite trame parmi d'autres trames émises par ledit émetteur. Ce numéro de séquence peut être une valeur de compteur de trames émises. Le serveur 130 est alors en mesure de supprimer les doublons dans les trames reçues des passerelles de collecte agissant comme relais. Le serveur 130 retient alors, pour la suite, quelle est la plus mauvaise indication de niveau de signal reçu RSSI parmi ces doublons. Pour ce faire, à chaque trame reçue par une passerelle de collecte en provenance d'un dispositif terminal, ladite passerelle de collecte détermine le niveau de signal reçu pour ladite trame et fournit au serveur 130, en association avec ladite trame, l'indication de niveau de signal reçu RSSI correspondante. Ainsi, si le serveur 130 a reçu une nouvelle trame en provenance du dispositif terminal 110, une étape 604 est effectuée; sinon, l'étape 603 est répétée jusqu'à réception d'une nouvelle trame en provenance du dispositif terminal 110.

Dans l'étape 604, le serveur 130 incrémente d'une unité le compteur Nb_Rx_Frames.

Dans une étape 605 suivante, le serveur 130 vérifie si l'indication de niveau de signal reçu RSSI pour la trame reçue à l'étape 603 est parmi les K+1 plus mauvaises indications de niveau de signal reçu RSSI pour la série de trames en cours d'analyse. Si tel est le cas, une étape 606 est effectuée ; sinon, une étape 607 est effectuée.

Dans l'étape 606, le serveur 130 mémorise, dans la mémoire tampon mise à disposition à cet effet, l'indication de niveau de signal reçu RSSI obtenue pour la trame reçue à l'étape 603. Si ladite mémoire tampon contient d'ores et déjà K+1 indications de niveau de signal reçu RSSI, alors le serveur 130 retire de ladite mémoire tampon la meilleure des indications de niveau de signal reçu RSSI qui y sont stockées, puis mémorise dans ladite mémoire tampon l'indication de niveau de signal reçu RSSI obtenue pour la trame reçue à l'étape 603. Ensuite, l'étape 607 est effectuée.

Dans l'étape 607, le serveur 130 vérifie si la fin de la série de N trames à analyser pour le palier en cours est atteinte. Le serveur 130 peut déterminer combien de trames ont été émises par le dispositif terminal 110 en comparant une valeur d'un compteur de trames émises qui était incluse dans la toute première trame reçue par le serveur 130 pour la série de N trames avec une valeur du compteur de trames émises qui était incluse dans la toute dernière trame reçue par le serveur 130 en provenance du dispositif terminal 110. Dans le protocole Lo-RaWAN, ces valeurs du compteur de trames émises sont inscrites dans le champ FH.FCNT des entêtes de trame FH respectifs desdites trames. Si la fin de la série de N trames à analyser pour le palier en cours est atteinte, une étape 608 est effectuée ; sinon, l'étape 603 est répétée jusqu'à réception d'une nouvelle trame en provenance du dispositif terminal 110.

Dans l'étape 608, le serveur 130 détermine un taux de perte de données ou un taux de délivrance de trames FDR (« Frame Delivery Rate » en anglais) sur la série de N trames à analyser pour le palier en cours. Le taux de délivrance de trames FDR est déterminé en divisant par N la quantité de trames effectivement reçues, telle que représentée par la valeur courante du compteur Nb_Rx_Frames. Le taux de perte de données est, quant à lui, déterminé en divisant par N la différence entre N et la quantité de trames effectivement reçues, telle que représentée par la valeur courante du compteur Nb_Rx_Frames.

Dans une étape 609 suivante, le serveur 130 vérifie si le taux de délivrance de trames FDR déterminé à l'étape 608 est inférieur ou égal au second seuil TH2 défini pour le palier courant. A noter que si l'on considère le taux de perte de données, le serveur 130 vérifie si ledit taux de perte de données est supérieur ou égal au second seuil TH2 défini pour le palier courant. Si le taux de délivrance de trames FDR déterminé à l'étape 608 est inférieur ou égal au second seuil TH2 défini pour le palier courant, une étape 610 est effectuée ; sinon, une étape 611 est effectuée. A noter que, lorsque le second seuil TH2 n'est pas défini pour le palier d'initialisation et que le palier en cours est le palier d'initialisation, l'algorithme passe alors directement de l'étape 608 à l'étape 611.

Dans l'étape 610, le serveur 130 désactive (ou stoppe) l'optimisation des paramètres en émission du dispositif terminal 110 et libère les ressources qui avaient été affectées pour ladite optimisation, notamment la mémoire tampon destinée à stocker les K+1 plus mauvaises indications de niveau de signal reçu RSSI parmi les trames reçues en provenance du dispositif terminal 110 dans chaque série de N trames. Il est alors mis fin à l'algorithme de la Fig. 6, après avoir assuré que le dispositif terminal 110 applique un profil d'émission choisi (e.g. par défaut) par le serveur 130. Dans une variante de réalisation, le serveur 130 réinitialise l'optimisation en repartant du premier palier, et l'étape 602 est exécutée.

Dans l'étape 611, le serveur 130 vérifie si le taux de délivrance de trames FDR déterminé à l'étape 608 est inférieur au premier seuil TH1 défini pour le palier en cours. A noter que si l'on considère le taux de perte de données, le serveur 130 vérifie si ledit taux de perte de données est supérieur au premier seuil TH1 défini pour le palier en cours. Si le taux de délivrance de trames FDR déterminé à l'étape 608 est inférieur au premier seuil TH1 défini pour le palier en cours, une étape 612 est effectuée ; sinon, une étape 613 est effectuée.

Dans l'étape 612, le serveur 130 sélectionne un profil d'émission correspondant à des paramètres d'émission tel que la sensibilité en réception SL correspondante (selon la table de correspondance entre profils d'émission prédéfinis et niveaux respectifs de sensibilité en réception SL) respecte la relation :

$$RSSI_{K+1} - M2 \leq SL$$

où $RSSI_{K+1}$ représente la meilleure des indications de niveau de signal reçu RSSI parmi les K+1 indications de niveau de signal reçu RSSI stockées dans la mémoire tampon susmentionnée, et K et M2 dépendent du palier en cours. Pour obtenir $RSSI_{K+1}$, il suffit que le serveur 130 retire de ladite mémoire tampon susmentionnée les K plus mauvaises indications de niveau de signal reçu RSSI qui y sont stockées. Le profil d'émission est préférentiellement choisi de telle sorte que la sensibilité en réception SL correspondante (selon la table de correspondance entre paramètres d'émission et niveaux respectifs de sensibilité en réception SL) respecte la relation ci-dessus et présente le plus petit écart avec $RSSI_{K+1}$ - M2 parmi les sensibilités en réception SL des profils d'émission prédéfinis. Le serveur 130 informe alors le dispositif terminal 110 du profil d'émission prédéfini sélectionné à l'étape 612, si ledit profil d'émission prédéfini sélectionné est différent du profil d'émission en cours d'utilisation par ledit dispositif terminal 110. Dans le cadre du protocole LoRaWAN, le serveur 130 utilise pour ce faire un message de type linkADRReq. L'étape 602 est ensuite répétée, en conservant le même palier. La mémoire tampon destinée à stocker les K+1 plus mauvaises indications de niveau de signal reçu RSSI est vidée, le compteur Nb_Rx_Frames est remis à zéro, et une nouvelle série de N trames est analysée.

Dans l'étape 613, le serveur 130 vérifie si le palier final a été atteint (dernière ligne de la table de la Fig. 5). Si le palier final a été atteint, une étape 616 est effectuée ; sinon, une étape 614 est effectuée.

Dans l'étape 614, le serveur 130 sélectionne un profil d'émission correspondant à des paramètres d'émission tel que la sensibilité en réception SL correspondante (selon la table de correspondance entre profils d'émission prédéfinis et niveaux respectifs de sensibilité en réception SL) respecte la relation :

$$RSSI_{K+1} - M1 \leq SL$$

où K et M1 dépendent du palier en cours. Le profil d'émission est préférentiellement choisi de telle sorte que la sensibilité en réception SL correspondante (selon la table de correspondance entre profils d'émission prédéfinis et niveaux respectifs de sensibilité en réception SL) respecte la relation ci-dessus et présente le plus petit écart avec $RSSI_{K+1}$ - M1 parmi les sensibilités en réception *SL* des profils d'émission prédéfinis. Le serveur 130 informe alors le dispositif terminal 110 du profil d'émission prédéfini sélectionné à l'étape 614, si ledit profil d'émission prédéfini sélectionné est différent du profil d'émission en cours d'utilisation par ledit dispositif terminal 110. Dans le cadre du protocole LoRaWAN, le serveur 130 utilise pour ce faire un message de type linkADRReq.

Dans une étape 615 suivante, le serveur 130 sélectionne le prochain palier. Ensuite, l'étape 602 est répétée. La mémoire tampon destinée à stocker les K+1 plus mauvaises indications de niveau de signal reçu RSSI est vidée, la taille de ladite mémoire est actualisée si la valeur du paramètre K pour le nouveau palier est différente de la valeur du paramètre K pour le palier précédent, le compteur Nb_Rx_Frames est remis à zéro, et une nouvelle série de N trames est analysé, la valeur du paramètre N étant en accord avec le nouveau palier.

Dans l'étape 616, le serveur 130 sélectionne un profil d'émission prédéfini correspondant à des paramètres d'émission tel que la sensibilité en réception *SL* correspondante (selon la table de correspondance entre profils d'émission prédéfinis et niveaux respectifs de sensibilité en réception SL) respecte la relation :

$$RSSI_{K+1} - \mathrm{M1} \le SL$$

où $RSSI_{K+1}$ représente la meilleure des indications de niveau de signal reçu RSSI parmi les K+1 indications de niveau de signal reçu RSSI stockées dans la mémoire tampon susmentionnée, et K et M1 dépendent du palier en cours (palier final à ce stade). Pour obtenir $RSSI_{K+1}$, il suffit que le serveur 130 retire de ladite mémoire tampon susmentionnée les K plus mauvaises indications de niveau de signal reçu RSSI qui y sont stockées. Le profil d'émission prédéfini est préférentiellement choisi de telle sorte que la sensibilité en réception *SL* correspondante (selon la table de correspondance entre profils d'émission prédéfinis et niveaux respectifs de sensibilité en réception SL) respecte la relation ci-dessus et présente le plus petit écart avec $RSSI_{K+1}$ - M1 parmi les sensibilités en réception *SL* des profils d'émission prédéfinis. Le serveur 130 informe alors le dispositif terminal 110 du profil d'émission prédéfini sélectionné à l'étape 612, si ledit profil d'émission prédéfini sélectionné est différent du profil d'émission en cours d'utilisation par ledit dispositif terminal 110. De plus, le serveur 130 demande au dispositif terminal 110 une diminution de la puissance d'émission TxPower utilisée par le dispositif terminal 110.

Dans le cadre du protocole LoRaWAN, le serveur 130 utilise pour ce faire un message de type linkADRReq. L'étape 602 est ensuite répétée, en conservant le même palier (palier final à ce stade). La mémoire tampon destinée à stocker les K+1 plus mauvaises indications de niveau de signal reçu RSSI est vidée, le compteur Nb_Rx_Frames est remis à zéro, et une nouvelle série de N trames est analysée.

Comme déjà exprimé en relation avec la Fig. 5, le serveur 130 peut en variante utiliser la seconde marge M2 au lieu de la première marge M1 pour déterminer le profil d'émission à l'étape 616. La différence entre l'étape 612 et l'étape 616 réside alors uniquement en ce que le niveau de puissance d'émission n'est ajusté qu'à l'étape 616, c'est-à-dire lorsque le taux de délivrance de trames FDR déterminé à l'étape 608 est supérieur ou égal au premier seuil TH1 de taux de délivrance de trames tel que défini pour le palier final.

## Revendications

1. Procédé d'adaptation dynamique d'un débit de données en émission d'un dispositif terminal (110, 111) dans un réseau de communication sans-fil, le procédé étant exécuté par un serveur (130) dudit réseau, des profils d'émission prédéfinis qui correspondent à des débits de données respectifs étant associés respectivement à des sensibilités en réception, lesdites sensibilités en réception représentant des niveaux minimum de signal en réception pour décoder des signaux transmis respectivement selon lesdits profils d'émission prédéfinis, **caractérisé en ce que** le serveur effectue une optimisation dudit débit de données en émission par paliers successifs, et **en ce que** chaque palier définit : une quantité N de trames à analyser, un premier seuil TH1 de taux de délivrance de trames, un second seuil TH2 de taux de délivrance de trames inférieur audit premier seuil TH1, une première marge M1, et une seconde marge M2 inférieure ou égale à ladite première marge M1, de telle sorte que ladite quantité N de chaque palier est inférieure ou égale à ladite quantité N du palier suivant, ladite première marge M1 de chaque palier est inférieure ou égale à ladite première marge M1 du palier suivant, et ladite seconde marge M2 de chaque palier est inférieure ou égale à ladite seconde marge M2 du palier suivant,

   et **en ce que**, lorsque l'optimisation est opérée selon un palier en cours, le serveur effectue les étapes suivantes :

   - retenir une indication de niveau de signal reçu pour chaque trame reçue d'une série de N trames émises par le dispositif terminal ;
   - déterminer (608) un taux de délivrance de trames pour ladite série de N trames ;
   - lorsque le taux de délivrance de trames déterminé est supérieur ou égal audit premier seuil TH1 du palier en cours, sélectionner (614) le profil d'émission à faire appliquer audit dispositif terminal en conservant au moins la seconde marge M2 du palier en cours entre l'indication de niveau de signal reçu retenue et la sensibilité en réception correspondant audit profil d'émission, et passer (615) au palier suivant ;
- lorsque le taux de délivrance de trames déterminé est inférieur audit premier seuil TH1 du palier en cours et est supérieur audit second seuil TH2 du palier en cours, sélectionner (612) le profil d'émission à faire appliquer audit dispositif terminal en conservant la première marge M1 du palier en cours entre l'indication de niveau de signal reçu retenue et la sensibilité en réception correspondant audit profil d'émission ; et
- lorsque le taux de délivrance de trames déterminé est inférieur ou égal audit second seuil TH2 du palier en cours, stopper (610) ou réinitialiser l'optimisation.

2. Procédé selon la revendication 1, **caractérisé en ce que** chaque palier définit en outre une quantité K de plus mauvaises indications de niveau de signal reçu à écarter par série de N trames, et **en ce que**, pour retenir une indication de niveau de signal reçu pour chaque trame reçue d'une série de N trames émises par le dispositif terminal, le serveur stocke les K+1 plus mauvaises indications de niveau de signal reçu pour ladite série de N trames, et le serveur retient la meilleure indication de niveau de signal reçu parmi les indications de niveau de signal reçu stockées.

3. Procédé selon l'une quelconque des revendications 1 et 2, **caractérisé en ce que** l'optimisation débute par un palier d'initialisation ne définissant pas de second seuil TH2 de taux de délivrance de trames.

4. Procédé selon l'une quelconque des revendications 1 à 3, **caractérisé en ce que** l'optimisation se termine par un palier final et, lorsque l'optimisation est opérée selon le palier final :

   - lorsque le taux de délivrance de trames déterminé est supérieur ou égal audit premier seuil TH1 dudit palier final, sélectionner (616) le profil d'émission à faire appliquer audit dispositif terminal en conservant au moins la seconde marge M2 du palier final entre l'indication de niveau de signal reçu retenue et la sensibilité en réception correspondant audit profil d'émission, et demander audit dispositif terminal de diminuer un niveau de puissance d'émission.

5. Procédé selon l'une quelconque des revendications 1 à 4, **caractérisé en ce que** le débit de données en émission est représenté par un facteur d'étalement d'une modulation de type Chirp Spread Spectrum, CSS.

6. Procédé selon l'une quelconque des revendications 1 à 5, **caractérisé en ce que** le réseau de communication sans-fil est un réseau étendu à longue portée de type Low Power WAN, LPWAN, **en ce que** le réseau de communication sans-fil relie le dispositif terminal à au moins une passerelle de collecte (120, 121, 122, 123) servant de relais avec le serveur, et **en ce que** le serveur reçoit chaque trame relayée par chaque passerelle de collecte en association avec une indication de niveau de signal reçu déterminée par ladite passerelle de collecte sur réception de ladite trame.

7. Procédé selon la revendication 6, **caractérisé en ce que** le réseau de communication sans-fil implémente le protocole Long Range WAN, LoRaWAN.

8. Programme d'ordinateur comportant un ensemble d'instructions causant l'exécution, par un processeur (201) d'un serveur (130) destiné à être inclus dans un réseau étendu à longue portée de type Low Power WAN, LPWAN, le procédé selon l'une quelconque des revendications 1 à 7, lorsque ledit programme d'ordinateur est exécuté par ledit processeur.

9. Support de stockage d'informations stockant un programme d'ordinateur comportant un ensemble d'instructions causant l'exécution, par un processeur (201) d'un serveur (130) destiné à être inclus dans un réseau étendu à longue portée de type Low Power WAN, LPWAN, le procédé selon l'une quelconque des revendications 1 à 7, lorsque ledit programme d'ordinateur est exécuté par ledit processeur.

10. Serveur (130) configuré pour effectuer une adaptation dynamique d'un débit de données en émission d'un dispositif terminal (110; 111) dans un réseau de communication sans-fil, des profils d'émission prédéfinis qui correspondent à des débits de données respectifs étant associés respectivement à des sensibilités en réception, lesdites sensibilités en réception représentant des niveaux minimum de signal en réception pour décoder des signaux transmis respectivement selon lesdits profil d'émission prédéfinis, **caractérisé en ce que** le serveur est configuré pour effectuer une optimisation dudit débit de données en émission par paliers successifs, et **en ce que** chaque palier définit : une quantité N de trames à analyser, un premier seuil TH1 de taux de délivrance de trames, un second seuil TH2 de taux de délivrance de trames inférieur audit premier seuil TH1, une première marge M1, et une seconde marge M2 inférieure ou égale à ladite première marge M1, de telle sorte que ladite quantité N de chaque palier est inférieure ou égale à ladite quantité N du palier suivant, ladite première marge M1 de chaque palier est inférieure ou égale à ladite première marge M1 du palier suivant, et ladite seconde marge M2 de chaque palier est inférieure ou égale à ladite seconde marge M2 du palier suivant,

et **en ce que** le serveur est configuré, lorsque l'optimisation est opérée selon un palier en cours, pour :

- retenir une indication de niveau de signal reçu pour chaque trame reçue d'une série de N trames émises par le dispositif terminal ;
- déterminer (608) un taux de délivrance de trames pour ladite série de N trames ;
- lorsque le taux de délivrance de trames déterminé est supérieur ou égal audit premier seuil TH1 du palier en cours, sélectionner (614) le profil d'émission à faire appliquer audit dispositif terminal en conservant au moins la seconde marge M2 du palier en cours entre l'indication de niveau de signal reçu retenue et la sensibilité en réception correspondant audit profil d'émission, et passer (615) au palier suivant ;
- lorsque le taux de délivrance de trames déterminé est inférieur audit premier seuil TH1 du palier en cours et est supérieur audit second seuil TH2 du palier en cours, sélectionner (612) le profil d'émission à faire appliquer audit dispositif terminal en conservant la première marge M1 du palier en cours entre l'indication de niveau de signal reçu retenue et la sensibilité en réception correspondant audit profil d'émission ; et
- lorsque le taux de délivrance de trames déterminé est inférieur ou égal audit second seuil TH2 du palier en cours, stopper (610) ou réinitialiser l'optimisation.

## Patentansprüche

1. Verfahren zur dynamischen Anpassung einer Sendedatenrate eines Endgeräts (110, 111) in einem drahtlosen Kommunikationsnetz, wobei das Verfahren von einem Server (130) des Netzes ausgeführt wird und vordefinierte Sendeprofile, die jeweiligen Datenraten entsprechen, jeweils Empfangsempfindlichkeiten zugeordnet sind, wobei die Empfangsempfindlichkeiten minimale Empfangssignalpegel zum Decodieren von jeweils gemäß den vordefinierten Sendeprofilen übertragenen Signalen darstellen, **dadurch gekennzeichnet, dass** der Server in aufeinanderfolgenden Stufen eine Optimierung der Datenrate durchführt, wobei jede Stufe Folgendes definiert: eine Menge N von zu analysierenden Rahmen, eine erste Schwelle TH1 der Rahmenausgaberate, eine zweite Schwelle TH2 der Rahmenausgaberate, die kleiner als die erste Schwelle TH1 ist, eine erste Marge M1 und eine zweite Marge M2, die kleiner oder gleich der ersten Marge M1 ist, sodass die Menge N jeder Stufe kleiner oder gleich der Menge N der folgenden Stufe ist, wobei die erste Marge M1 jeder Stufe kleiner oder gleich der ersten Marge M1 der folgenden Stufe ist und die zweite Marge M2 jeder Stufe kleiner oder gleich der zweiten Marge M2 der folgenden Stufe ist,

und **gekennzeichnet dadurch, dass** wenn die Optimierung gemäß einer aktuellen Stufe durchgeführt wird, der Server die folgenden Schritte ausführt:

- Beibehalten einer Pegelangabe des empfangenen Signals für jeden empfangenen Rahmen einer Reihe von N Rahmen, die vom Endgerät gesendet werden;
- Bestimmen (608) einer Rahmenausgaberate für die Reihe von N Rahmen;
- wenn die bestimmte Rahmenausgaberate größer oder gleich der ersten Schwelle TH1 der aktuellen Stufe ist, Auswählen (614) des Sendeprofils, das auf das Endgerät angewendet werden soll unter Beibehaltung von mindestens der zweiten Marge M2 der aktuellen Stufe zwischen der beibehaltenen Pegelangabe des empfangenen Signals und der Empfangsempfindlichkeit, die dem Sendeprofil entspricht, und Weitergehen (615) zur nächsten Stufe;
- wenn die bestimmte Rahmenausgaberate kleiner als die erste Schwelle TH1 der aktuellen Stufe und größer als die zweite Schwelle TH2 der aktuellen Stufe ist, Auswählen (612) des Sendeprofils, das auf das Endgerät angewendet werden soll unter Beibehaltung der ersten Marge M1 der aktuellen Stufe zwischen der beibehaltenen Pegelangabe des empfangenen Signals und der Empfangsempfindlichkeit, die dem Sendeprofil entspricht; und
- wenn die bestimmte Rahmenausgaberate kleiner oder gleich der zweiten Schwelle TH2 der aktuellen Stufe ist, Stoppen (610) oder Zurücksetzen der Optimierung.

2. Verfahren nach Anspruch 1, **dadurch gekennzeichnet, dass** jede Stufe darüber hinaus eine Menge K der schlechtesten Pegelangaben des empfangenen Signals definiert, die pro Reihe von N Rahmen zu verwerfen sind, und wobei zum Beibehalten einer Pegelangabe des empfangenen Signals für jeden empfangenen Rahmen einer Reihe von N Rahmen, die vom Endgerät gesendet werden, der Server die K+1 schlechtesten Pegelangaben des empfangenen Signals für die Reihe von N Rahmen speichert und der Server die beste Pegelangabe des empfangenen Signals unter den gespeicherten Pegelangaben des empfangenen Signals beibehält.

3. Verfahren nach einem der Ansprüche 1 und 2, **dadurch gekennzeichnet, dass** die Optimierung mit einer Initialisierungsstufe beginnt, die keine zweite Schwelle TH2 einer Rahmenausgaberate definiert.

4. Verfahren nach einem der Ansprüche 1 bis 3, **dadurch gekennzeichnet, dass** die Optimierung mit einer Abschlussstufe endet und bei Durchführung der Optimierung gemäß der Abschlussstufe Folgendes ausgeführt wird:

- wenn die bestimmte Rahmenausgaberate größer oder gleich der ersten Schwelle TH1 der Abschlussstufe ist, Auswählen (616) des Sendeprofils, das auf das Endgerät angewendet werden soll unter Beibehaltung von mindestens der zweiten Marge M2 der Abschlussstufe zwischen der beibehaltenen Pegelangabe des empfangenen Signals und der Empfangsempfindlichkeit, die dem Sendeprofil entspricht, und Auffordern des Endgeräts, einen Sendeleistungspegel zu verringern.

**5.** Verfahren nach einem der Ansprüche 1 bis 4, **dadurch gekennzeichnet, dass** die Sendedatenrate durch einen Spreizfaktor einer Modulation des Typs Chirp Spread Spectrum, CSS, dargestellt wird.

**6.** Verfahren nach einem der Ansprüche 1 bis 5, **dadurch gekennzeichnet, dass** das drahtlose Kommunikationsnetz ein Fernbereichsnetz des Typs Low Power WAN, LPWAN, ist, wobei das drahtlose Kommunikationsnetz das Endgerät mit mindestens einem Sammlungs-Gateway (120, 121, 122, 123) verbindet, das als Relais mit dem Server dient, und dadurch, dass der Server jeden von jedem Sammlungs-Gateway weitergeleiteten Rahmen in Verbindung mit einer durch das Sammlungs-Gateway bei Empfang des Rahmens bestimmten Pegelangabe des empfangenen Signals empfängt.

**7.** Verfahren nach Anspruch 6, **dadurch gekennzeichnet, dass** das drahtlose Kommunikationsnetz das Protokoll Long Range WAN, LoRaWAN, implementiert.

**8.** Computerprogramm, das eine Reihe von Anweisungen aufweist, die die Ausführung des Verfahrens nach einem der Ansprüche 1 bis 7 durch einen Prozessor (201) eines Servers (130) veranlassen, der in einem Fernbereichsnetz des Typs Low Power WAN, LPWAN, enthalten sein soll, wenn das Computerprogramm von dem Prozessor ausgeführt wird.

**9.** Informationsspeichermedium, das ein Computerprogramm speichert, das eine Reihe von Anweisungen aufweist, die die Ausführung des Verfahrens nach einem der Ansprüche 1 bis 7 durch einen Prozessor (201) eines Servers (130) veranlassen, der in einem Fernbereichsnetz des Typs Low Power WAN, LPWAN, enthalten sein soll, wenn das Computerprogramm von dem Prozessor ausgeführt wird.

**10.** Server (130), der ausgebildet ist zum Durchführen einer dynamischen Anpassung einer Sendedatenrate eines Endgeräts (110, 111) in einem drahtlosen Kommunikationsnetz, wobei vordefinierte Sendeprofile, die jeweiligen Datenraten entsprechen, jeweils Empfangsempfindlichkeiten zugeordnet sind, wobei die Empfangsempfindlichkeiten minimale Empfangssignalpegel zum Decodieren von jeweils gemäß den vordefinierten Sendeprofilen übertragenen Signalen darstellen, **dadurch gekennzeichnet, dass** der Server ausgebildet ist zum Durchführen einer Optimierung der Datenrate in aufeinanderfolgenden Stufen, wobei jede Stufe Folgendes definiert: eine Menge N von zu analysierenden Rahmen, eine erste Schwelle TH1 der Rahmenausgaberate, eine zweite Schwelle TH2 der Rahmenausgaberate, die kleiner als die erste Schwelle TH1 ist, eine erste Marge M1 und eine zweite Marge M2, die kleiner oder gleich der ersten Marge M1 ist, sodass die Menge N jeder Stufe kleiner oder gleich der Menge N der folgenden Stufe ist, wobei die erste Marge M1 jeder Stufe kleiner oder gleich der ersten Marge M1 der folgenden Stufe ist und die zweite Marge M2 jeder Stufe kleiner oder gleich der zweiten Marge M2 der folgenden Stufe ist, und wobei der Server ausgebildet ist, Folgendes auszuführen, wenn die Optimierung gemäß einer aktuellen Stufe durchgeführt wird:

- Beibehalten einer Pegelangabe des empfangenen Signals für jeden empfangenen Rahmen einer Reihe von N Rahmen, die vom Endgerät gesendet werden;
- Bestimmen (608) einer Rahmenausgaberate für die Reihe von N Rahmen;
- wenn die bestimmte Rahmenausgaberate größer oder gleich der ersten Schwelle TH1 der aktuellen Stufe ist, Auswählen (614) des Sendeprofils, das auf das Endgerät angewendet werden soll unter Beibehaltung von mindestens der zweiten Marge M2 der aktuellen Stufe zwischen der beibehaltenen Pegelangabe des empfangenen Signals und der Empfangsempfindlichkeit, die dem Sendeprofil entspricht, und Weitergehen (615) zur nächsten Stufe;
- wenn die bestimmte Rahmenausgaberate kleiner als die erste Schwelle TH1 der aktuellen Stufe und größer als die zweite Schwelle TH2 der aktuellen Stufe ist, Auswählen (612) des Sendeprofils, das auf das Endgerät angewendet werden soll unter Beibehaltung der ersten Marge M1 der aktuellen Stufe zwischen der beibehaltenen Pegelangabe des empfangenen Signals und der Empfangsempfindlichkeit, die dem Sendeprofil entspricht; und
- wenn die bestimmte Rahmenausgaberate kleiner oder gleich der zweiten Schwelle TH2 der aktuellen Stufe ist, Stoppen (610) oder Zurücksetzen der Optimierung.

## Claims

1. Method for dynamic adaptation of a transmission data rate of a terminal device (110) in a wireless communication network, the method being executed by a server (130) in said network, predefined transmission profiles that correspond to respective data rates being associated respectively with reception sensitivities, said reception sensitivities representing minimum signal reception levels for decoding the signals transmitted respectively according to said predefined transmission profiles, **characterised in that** the server performs an optimisation of said transmission data rate in successive stages, and **in that** each stage defines: a quantity N of frames to be analysed, a first frame delivery rate threshold TH1, a second frame delivery rate threshold TH2 lower than said first threshold TH1, a first margin M1, and a second margin M2 less than or equal to said first margin M1, so that said quantity N of each stage is less than or equal to said quantity N of the following stage, said first margin M1 of each stage is smaller than or equal to said first margin M1 of the following stage, and said second margin M2 of each stage is smaller than or equal to said second margin M2 of the following stage,

   and **in that**, when the optimisation is performed according to a current stage, the server performs the following steps:

   - retaining a received signal strength indication for each frame received in a series of N frames transmitted by the terminal device;
   - determining (608) a frame delivery rate for said series of N frames;
   - when the determined frame delivery rate is greater than or equal to said first threshold TH1 of the current stage, selecting (614) the transmission profile to be applied to said terminal device while keeping at least the second margin M2 of the current stage between the retained received signal strength indication and the reception sensitivity corresponding to said transmission profile, and switching (615) to the following stage;
   - when the determined frame delivery rate is lower than said first threshold TH1 of the current stage and is higher than said second threshold TH2 of the current stage, selecting (612) the transmission profile to be applied to said terminal device while keeping the first margin M1 of the current stage between the retained received signal strength indication and the reception sensitivity corresponding to said transmission profile; and
   - when the determined frame delivery rate is below or equal to said second threshold TH2 of the current stage, stopping (610) or reinitialising the optimisation.

2. Method according to claim 1, **characterised in that** each stage further defines a quantity K of worst received signal strength indications to be rejected by series of N frames, and **in that**, for retaining a received signal strength indication for each frame received in a series of N frames transmitted by the terminal device, the server stores the K+1 worst indications of the received signal strength for said series of N frames, and the server retains the best received signal strength indication among the stored received signal strength indications.

3. Method according to any one of claims 1 and 2, **characterised in that** the optimisation begins with an initialisation stage not defining any second frame delivery rate threshold TH2.

4. Method according to any one of claims 1 to 3, **characterised in that** the optimisation ends with a final stage and, when the optimisation is performed according to the final stage:

   - when the determined frame delivery rate is higher than or equal to said first threshold TH1 of said final stage, selecting (616) the transmission profile to be applied to said terminal device while keeping at least the second margin M2 of the final stage between the retained received signal strength indication and the reception sensitivity corresponding to said transmission profile, and requesting said terminal device to reduce a transmission power level.

5. Method according to any one of claims 1 to 4, **characterised in that** the transmission data rate is represented by a spread factor of a modulation of the Chirp Spread Spectrum CSS type.

6. Method according to any one of claims 1 to 5, **characterised in that** the wireless communication network is a long-range wide-area network of the Low-Power WAN, LPWAN, type, **in that** the wireless communication network connects the terminal device to at least one gathering gateway (120, 121, 122, 123) serving as a relay with the server, and **in that** the server receives each frame relayed by each gathering gateway in association with a received signal strength indication determined by said gathering gateway on reception of said frame.

7. Method according to claim 6, **characterised in that** the wireless communication network implements the Long Range WAN, LoRaWAN, protocol.

8. Computer program comprising a set of instructions causing execution, by a processor (201) of a server (130) intended to be included in a long-range wide area network of the Low-Power WAN, LPWAN, type, the method according to any one of claims 1 to 7, when said computer program is executed by said processor.

9. Information storage medium storing a computer program comprising a set of instructions causing execution, by a processor (201) of a server (130) intended to be included in a long-range wide area network of the Low-Power WAN, LPWAN, type, the method according to any one of claims 1 to 7, when said computer program is executed by said processor.

10. Server (130) configured to perform a dynamic adaptation of a transmission data rate of a terminal device (110, 111) in a wireless communication network, predefined transmission profiles that correspond to respective data rates being associated respectively with reception sensitivities, said reception sensitivities representing minimum signal reception levels for decoding signals transmitted respectively according to said predefined transmission profiles, **characterised in that** the server is configured to perform an optimisation of said transmission data rate in successive stages, and **in that** each stage defines: a quantity N of frames to be analysed, a first frame delivery rate threshold TH1, a second frame delivery rate threshold TH2 lower than said first threshold TH1, a first margin M1, and a second margin M2 smaller than or equal to said first margin M1, so that said quantity N of each stage is less than or equal to said quantity N of the following stage, said first margin M1 of each stage is less than or equal to said first margin M1 of the following stage, and said second margin M2 of each stage is less than or equal to said second margin M2 of the following stage, and **in that** the server is configured, when the optimisation is performed according to a current stage, to:

- retain a received signal strength indication for each frame received in a series of N frames transmitted by the terminal device;
- determine (608) a frame delivery rate for said series of N frames;
- when the determined frame delivery rate is greater than or equal to said first threshold TH1 of the current stage, select (614) the transmission profile to be applied to said terminal device while keeping at least the second margin M2 of the current stage between the retained received signal strength indication and the reception sensitivity corresponding to said transmission profile, and switch (615) to the following stage;
- when the determined frame delivery rate is lower than said first threshold TH1 of the current stage and is higher than said second threshold TH2 of the current stage, select (612) the transmission profile to be applied to said terminal device while keeping the first margin M1 of the current stage between the retained received signal strength indication and the reception sensitivity corresponding to said transmission profile; and
- when the determined frame delivery rate is less than or equal to said second threshold TH2 of the current stage, stop (610) or reinitialise the optimisation.

Fig. 1

| 201<br>CPU | 202<br>RAM | 203<br>ROM |
|:---:|:---:|:---:|

| 204 | 205 | 206 |
|:---:|:---:|:---:|

210

Fig. 2

| 311 | | 331 |
|:---:|:---:|:---:|
| 312 | 321 | 332 |
| 313 | 322 | 323 | 333 |
| 110 | 120 | 130 |

Fig. 3

| SF | SL (dBm) |
|------|----------|
| SF12 | -140 |
| SF11 | -137 |
| SF10 | -134 |
| SF9 | -131 |
| SF8 | -128 |
| SF7 | -125 |

Fig. 4

| ID | N | TH1(%) | TH2(%) | K | M1 | M2 |
|----|-----|--------|--------|----|------|------|
| 1 | 1 | 100% | N/A | 0 | 20dB | 10dB |
| 2 | 10 | 90% | 70% | 1 | 12dB | 6dB |
| 3 | 100 | 95% | 75% | 3 | 6dB | 3dB |
| 4 | 300 | 98% | 75% | 10 | 3dB | 3dB |

Fig. 5

Fig. 6

**EP 3 420 678 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015103785 A1
- US 6563822 B1